# EUROPEAN PATENT APPLICATION

(11) **EP 4 657 263 A2**
(43) Date of publication of application: **03.12.2025**
(21) Application number: 25179815.3
(22) Date of filing: 30.05.2025
(51) Int. Cl.: G06F 11/16, G06F 11/14

(54) **PROCESSING SYSTEM CONFIGURED TO PROCESS PROTECTED TASKS**

(30) Priority: 30.05.2024 GB 202407689
(71) Applicant: Imagination Technologies Limited, Kings Langley, Hertfordshire WD4 8LZ (GB)
(72) Inventor: Munnan, Ravindranath Ramalingaiah, Hertfordshire, WD4 8LZ (GB); Savulimedu Veeravalli, Varadan, Hertfordshire, WD4 8LZ (GB); Duvvuri, Sree Ram Kishore, Hertfordshire, WD4 8LZ (GB); Kallakuri, Chaitanya, Hertfordshire, WD4 8LZ (GB)
(74) Representative: Slingsby Partners LLP

(57) **Abstract**

A processing system configured to process protected tasks, the processing system comprising: processing logic configured to process each of the protected tasks first and second times so as to generate, respectively, first and second processed outputs; a first fault detection unit operable in a mission mode in which it is configured to: compare the first and second processed outputs for a respective protected task; and generate a first signal indicative of whether said first and second processed outputs match; and a second fault detection unit operable in a mission mode in which it is configured to: compare the first and second processed outputs for the respective protected task; and generate a second signal indicative of whether said first and second processed outputs match; wherein the processing system is operable in a first protected mode in which: the first fault detection unit and the second fault detection unit operate, concurrently, in their respective mission modes; and the first signal and the second signal for the respective protected task are provided to a fault assessment unit for comparison in order to assess whether a fault existed at the first fault detection unit and/or the second fault detection unit when generating the first and second signals.

## Description

### CROSS-REFERENCE TO RELATED APPLICATION

This application claims priority from UK patent application 2407689.5 filed on 30 May 2024, which is herein incorporated by reference in its entirety.

### TECHNICAL FIELD

The present disclosure is directed to a processing system configured to process protected tasks, and to a method of processing a protected task at a processing system.

### BACKGROUND

In safety-critical systems, at least some of the components of a system must meet safety goals sufficient to enable the system as a whole to meet a level of safety deemed necessary for that system. For example, in most jurisdictions, seat belt retractors in vehicles must meet specific safety standards in order for a vehicle provided with such devices to pass safety tests. Likewise, vehicle tyres must meet specific standards in order for a vehicle equipped with such tyres to pass the safety tests appropriate to a particular jurisdiction. Safety-critical systems are typically those systems whose failure would cause a significant increase in the risk to the safety of people or the environment.

Processing systems (e.g. data processing systems) often form an integral part of safety-critical systems, either as dedicated hardware or as processors for running safety-critical software. For example, fly-by-wire systems for aircraft, driver assistance systems, railway signalling systems and control systems for medical devices would typically all be safety-critical systems running on processing systems. Where processing systems form an integral part of a safety-critical system it is necessary for the processing system itself to satisfy safety goals such that the system as a whole can meet the appropriate safety level. In the automotive industry, the safety level is normally an Automotive Safety Integrity Level (ASIL) as defined in the functional safety standard ISO 26262.

Increasingly, processing systems forming an integral part of safety-critical systems comprise a processor running software. Both the hardware and software elements must meet specific safety goals.

Software failures are typically systematic failures due to programming errors or poor error handling. For software, the safety goals are typically achieved through rigorous development practices, code auditing and testing protocols.

For the hardware elements of a processing system, such as its processing unit(s), safety goals may be expressed as a set of metrics, such as: a maximum number of failures in a given period of time (often expressed as Failures in Time, or FIT); and the effectiveness of mechanisms for detecting single point failures (e.g. Single Point Fault Metric, or SPFM) and latent failures (e.g. Latent Fault Metric, or LFM). It is possible for the hardware elements of a processing system to develop permanent faults. It may not be possible for those hardware elements to recover from (e.g. return to normal operation after developing) a permanent fault. It is also possible for the hardware elements of a processing system to develop transient faults. For example, transient faults can be introduced into hardware by transient events (e.g. due to ionizing radiation, voltage spikes, or electromagnetic pulses). In binary systems, these types of transient events can cause random bit-flipping in memories and along the data paths of a processor. It may be possible for the hardware elements of a processing system to recover from (e.g. return to normal operation after developing) a transient fault. For example, this could be achieved by returning those hardware elements to a known state - e.g. by performing a "reset" of those hardware elements. In general, transient or permanent faults in memory or data paths that move data without transforming it can be protected against and/or corrected for by error correcting code (ECC) and/or parity bit check error detection mechanisms. By contrast, error correcting code (ECC) and parity bit check error detection mechanisms often cannot be used to protect against and/or correct transient or permanent faults in processing logic that does transform data.

Driver-assistance systems and autonomous vehicle systems are examples of safety-critical systems that can incorporate processing systems which are suitable for such safety-critical applications.

In an example, driver-assistance systems often provide computer-generated graphics illustrating hazards, lane position, and other information to the driver of a vehicle. Typically this will lead the vehicle manufacturer to replace a conventional instrument cluster with a computer-generated instrument cluster, which also means that the display of safety-critical information such as speed and vehicle fault information becomes computer-generated. Such processing demands can be met by processing systems. Driver-assistance systems typically require a processing system which meets ASIL level B of ISO 26262

In another example, autonomous vehicle systems typically process very large amounts of data (e.g. from RADAR, LIDAR, map data and vehicle information) in real-time in order to make safety-critical decisions hundreds of times a second. Processing systems can also help meet such processing demands. Autonomous vehicle systems typically require a processing system which meets the most stringent ASIL level D of ISO 26262.

It is to be understood that driver-assistance systems and autonomous vehicle systems are just examples of safety-critical systems that use processing systems that are required to meet the ASIL B or ASIL D standards of ISO 26262. It is to be understood that many other safety-critical vehicle systems may use processing systems that are required to meet the ASIL B or ASIL D standards of ISO 26262.

In order to be certified as meeting the ASIL B or ASIL D standards of ISO 26262, it may need to be demonstrated that a range of different faults that might occur at a processing system can be detected within a predetermined time period of those faults occurring. As such, it is desirable to provide a processing system that is configured in such a way that one or more faults occurring at that processing system can be detected.

It is also to be understood that processing systems can be used in other applications, other than the automotive applications described so far. For example, processing systems can be used in super-computing / data centre applications. In said other applications, it can also be desirable to provide a processing system that is configured in such a way that one or more faults occurring at that processing system can be detected - e.g. such that appropriate action(s) can be timely taken to recover from those faults, and/or such that faulty or defective parts can be identified and replaced - whether or not those other applications are subject to safety standards.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

According to a first aspect of the present invention there is provided a processing system configured to process protected tasks, the processing system comprising: processing logic configured to process each of the protected tasks first and second times so as to generate, respectively, first and second processed outputs; a first fault detection unit operable in a mission mode in which it is configured to: compare the first and second processed outputs for a respective protected task; and generate a first signal indicative of whether said first and second processed outputs match; and a second fault detection unit operable in a mission mode in which it is configured to: compare the first and second processed outputs for the respective protected task; and generate a second signal indicative of whether said first and second processed outputs match; wherein the first signal and/or the second signal are indicative of whether one or more faults existed in the processing system during processing of the respective protected task and/or when generating said first and second signals.

The processing system may be operable in a first protected mode in which the first fault detection unit and the second fault detection unit operate, concurrently, in their respective mission modes, wherein the first signal and the second signal for the respective protected task can be compared in order to assess whether a fault existed at the first fault detection unit and/or the second fault detection unit when generating the first and second signals.

The first signal and/or the second signal can also be used to assess whether a fault existed at the processing logic during processing of the respective protected task.

The first fault detection unit may be further operable in a test mode in which a test is performed to assess whether the first fault detection unit is functioning correctly; and/or the second fault detection unit may be further operable in a test mode in which a test is performed to assess whether the second fault detection unit is functioning correctly.

The test may comprise inputting one or more predetermined test inputs into logic of the respective fault detection unit and assessing whether the resultant one or more outputs of that logic match one or more expected test outputs.

The one or more predetermined test inputs may be generated by a test pattern generator unit comprised by the respective fault detection unit.

The processing system may be operable in a second protected mode in which: one of the first fault detection unit and the second fault detection unit operates in its test mode so as to assess whether that fault detection unit is functioning correctly; and concurrently, the other of the first fault detection unit and the second fault detection unit operates in its mission mode so as to generate the respective first or second signal, wherein the respective first or second signal can be used to assess whether a fault existed at the processing logic during processing of the respective protected task.

The processing system may be configured to process a series of protected tasks, and operate in the first protected mode and the second protected mode during said processing.

The processing system may be configured to operate such that, throughout the processing of the series of protected tasks, at least one of the first fault detection unit and the second fault detection unit is operating in its respective mission mode.

The processing system may be configured to operate such that, during processing of the series of protected tasks: for a first period of time, both the first fault detection unit and the second fault detection unit concurrently operate in their respective mission modes; for a second period of time, the first fault detection unit operates in its mission mode and, concurrently, the second fault detection unit operates in its test mode; and for a third period of time, the second fault detection unit operates in its mission mode and, concurrently, the first fault detection unit operates in its test mode.

The processing system may be further configured to process non-protected tasks, the processing logic may be configured to process each of the non-protected tasks a single time so as to generate a single processed output, and the processing system may be operable in a non-protected mode in which the first fault detection unit and the second fault detection unit operate, concurrently, in their respective test modes so as to assess whether those fault detection units are functioning correctly.

Comparing the first and second processed outputs for the respective protected task may comprise: forming first and second signatures which are characteristic of, respectively, the first and second processed outputs for the respective protected task; and comparing the first and second signatures.

The processing logic may comprise: a first processing element configured to process each protected task for the first time so as to generate the first processed output for that protected task; and a second processing element configured to process each protected task for the second time so as to generate the second processed output for that protected task.

The processing logic may comprise a processing element configured to process each protected task for the first and second times so as to generate, respectively, the first and second processed outputs for that protected task.

The processing logic may further comprise the datapath between the processing element(s) and the first and second fault detection units.

According to a second aspect of the present invention there is provided a method of processing a protected task at a processing system comprising processing logic configured to process protected tasks first and second times so as to generate, respectively, first and second processed outputs, a first fault detection unit operable in a mission mode in which it is configured to compare first and second processed outputs for a respective protected task and generate a first signal indicative of whether said first and second processed outputs match, and a second fault detection unit operable in a mission mode in which it is configured to compare the first and second processed outputs for the respective protected task and generate a second signal indicative of whether said first and second processed outputs match, the method comprising: processing, using the processing logic, the protected task first and second times so as to generate, respectively, first and second processed outputs; comparing, using the first fault detection unit, the first and second processed outputs for the protected task; generating, using the first fault detection unit, a first signal indicative of whether said first and second processed outputs match; and assessing, in dependence on the first signal, whether one or more faults existed in the processing system during processing of the protected task and/or when generating the first signal.

The method may further comprise, when the processing system is operating in a second protected mode: concurrently to said processing, comparing and/or generating, performing a test on the second fault detection unit to assess whether the second fault detection unit is functioning correctly; and assessing, in dependence on the first signal, whether a fault existed at the processing logic during processing of the protected task.

The method may further comprise, when the processing system is operating in a first protected mode: comparing, using the second fault detection unit, the first and second processed outputs for the protected task; generating, using the second fault detection unit, a second signal indicative of whether said first and second processed outputs match; and comparing the first signal and the second signal in order to assess whether a fault existed at the first fault detection unit and/or the second fault detection unit when generating the first and second signals.

The method may further comprise, when the processing system is operating in a second protected mode: processing, using the processing logic, a further protected task first and second times so as to generate, respectively, first and second further processed outputs; comparing, using the first fault detection unit, the first and second further processed outputs for the further protected task; generating, using the first fault detection unit, a further first signal indicative of whether said first and second further processed outputs match; concurrently to said processing, comparing and/or generating, performing a test on the second fault detection unit to assess whether the second fault detection unit is functioning correctly; and assessing, in dependence on the further first signal, whether a fault existed at the processing logic during processing of the further protected task.

The method may further comprise, when the processing system is operating in the second protected mode: processing, using the processing logic, an additional protected task first and second times so as to generate, respectively, first and second additional processed outputs; comparing, using the second fault detection unit, the first and second additional processed outputs for the additional protected task; generating, using the second fault detection unit, an additional second signal indicative of whether said first and second additional processed outputs match; concurrently to said processing, comparing and/or generating, performing a test on the first fault detection unit to assess whether the first fault detection unit is functioning correctly; and assessing, in dependence on the additional second signal, whether a fault existed at the processing logic during processing of the additional protected task.

The method may further comprise, when the processing system is operating in a non-protected mode: processing, using the processing logic, a non-protected task a single time so as to generate a single processed output; performing a test on the first fault detection unit to assess whether the first fault detection unit is functioning correctly; and concurrently to said performing, performing a test on the second fault detection unit to assess whether the second fault detection unit is functioning correctly.

The processing system may be embodied in hardware on an integrated circuit. There may be provided a method of manufacturing, at an integrated circuit manufacturing system, the processing system. There may be provided an integrated circuit definition dataset that, when processed in an integrated circuit manufacturing system, configures the system to manufacture the processing system. There may be provided a non-transitory computer readable storage medium having stored thereon a computer readable description of the processing system that, when processed in an integrated circuit manufacturing system, causes the integrated circuit manufacturing system to manufacture an integrated circuit embodying the processing system.

There may be provided an integrated circuit manufacturing system comprising: a non-transitory computer readable storage medium having stored thereon a computer readable description of the processing system; a layout processing system configured to process the computer readable description so as to generate a circuit layout description of an integrated circuit embodying the processing system; and an integrated circuit generation system configured to manufacture the processing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows an example processing system.
Figure 2 shows a typical processing system configured to process protected tasks.
Figure 3 shows an example processing system configured to process protected tasks according to the principles described herein.
Figure 4A shows an example fault detection unit operating in its mission mode.
Figure 4B shows an example fault detection unit operating in its test mode.
Figure 5 shows an example method of processing a protected task at a processing system according to the principles described herein.
Figure 6 shows a computer system in which a processing system according to the principles described herein can be implemented; and
Figure 7 shows an integrated circuit manufacturing system for generating an integrated circuit embodying a processing system according to the principles described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

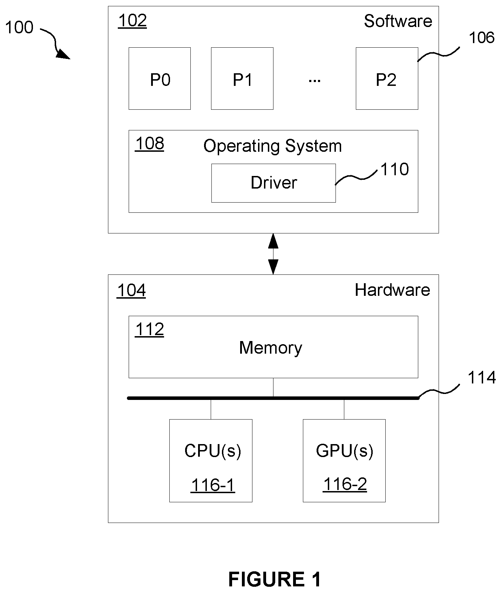

Figure 1 shows an example processing system 100. The processing system 100 comprises hardware in a hardware environment 104 and software in a software environment 102. Within the hardware environment 104, the processing system 100 comprises one or more central processing units (CPU(s)) 116-1 and one or more graphics processing units (GPU(s)) 116-2. Processing system 100 may comprise any suitable number of CPUs. Processing system 100 may comprise any suitable number of GPUs. CPU(s) 116-1 and GPU(s) 116-2 may have any suitable architecture. Each CPU 116-1 may comprise one or more cores. That is, CPU(s) 116-1 may comprise one or more single core CPUs and/or one or more multi-core CPUs. CPU(s) 116-1 may comprise one or more CPUs that are capable of performing parallel processing. For example, each of the cores of a multi-core CPU may be capable of concurrently processing respective tasks independently of one another. At least one CPU may comprise one or more parallel processing engines, where each parallel processing engine (e.g. "pipeline") comprises a plurality of processing instances (e.g. "pipes") configured to process tasks in parallel. In other words, each parallel processing engine may be configured to perform Single Instruction, Multiple Data (SIMD) processing. Examples of parallel processing engines include: integer pipelines, floating-point pipelines, complex (e.g. special function unit) pipelines, identical multipliers within a vector processing unit or other arithmetic logic unit, or any other suitable type of parallel processing engine. Each GPU 116-2 may comprise one or more cores. That is, GPU(s) 116-2 may comprise one or more single core GPUs and/or one or more multi-core GPUs. GPU(s) 116-2 may comprise one or more GPUs that are capable of performing parallel processing. For example, each of the cores of a multi-core GPU may be capable of concurrently processing respective tasks independently of one another. At least one GPU may comprise one or more parallel processing engines, as described herein. CPU(s) 116-1 and GPU(s) 116-2 are described herein as examples of processing units that may be comprised by a processing system. It is to be understood that a processing system may alternatively, or additionally, comprise other types of processing unit not shown in Figure 1, such as one or more digital signal processing unit(s) (e.g. DSP(s)), one or more tensor processing units (e.g. TPU(s)), and/or any other suitable type(s) of processing unit. It is also to be understood that a processing system need not comprise both CPU(s) and GPU(s).

Within the hardware environment 104, the processing system 100 also comprises a memory 112, and one or more data buses and/or interconnects 114 over which the CPU(s) 116-1 and GPU(s) 116-2, and memory 112, may communicate. CPU(s) 116-1 and/or GPU(s) 116-2 may be implemented on a chip (e.g. semiconductor die and/or integrated circuit package) and memory 112 may not be physically located on the same chip (e.g. semiconductor die and/or integrated circuit package) as the CPU(s) 116-1 and/or GPU(s) 116-2. As such, memory 112 may be referred to as "off-chip memory". Memory 112 may be used to store data for CPU(s) 116-1, GPU(s) 116-2 and/or other processing units (not shown in Figure 1) of the processing system 100. As such, memory 112 may be referred to as "system memory" and/or "global memory". Memory 112 may be a dynamic random access memory (e.g. DRAM).

A plurality of processes (P0, P1, P2) 106 may be executed within the software environment 102. An operating system 108 may provide an abstraction of the available hardware to the processes 106. The operating system may include a driver 110 for the CPU(s) 116-1 and/or GPU(s) 116-2 so as to expose the functionalities of the CPU(s) 116-1 and/or GPU(s) 116-2 to the processes. All or part of the software environment 102 may be provided as firmware.

One or more of the processes 106 may be safety-critical processes. Processes 106 may comprise a mixture of safety-critical processes which must be executed according to a predefined safety level and non-safety-critical processes which do not need to be executed according to a predefined safety level. In an example, the processing system 100 forms part of a vehicle control system, with the processes 106 each performing one or more control functions of the vehicle, such as the display of warning lights on an instrument cluster (e.g. safety-critical), the display of time-of-day on the instrument cluster (e.g. non-safety-critical), entertainment system (e.g. non-safety-critical), engine management (e.g. safety-critical), climate control (e.g. non-safety-critical), lane control (e.g. safety-critical), steering correction (e.g. safety-critical), automatic braking systems (e.g. safety-critical), etc.

Processes 106 cause tasks to be processed in the hardware environment 104. A task may be any portion of work for processing in the hardware environment 104. The processing logic within the hardware environment 104 may be operable to process any kind of graphics, image or video processing tasks, general processing tasks and/or any other type of data processing tasks - such as the processing of general computing tasks. Graphics, image or video processing tasks may relate to any aspect of graphics processing, including tiling, geometry calculations, texture mapping, shading, anti-aliasing, ray tracing, pixelization and tessellation. Such a task may relate to all or part of a scene for rendering to memory or a display screen, all or part of an image or video frame, or any other data. In tiled renderers, each task may relate to a tile. Examples of general computing tasks include: signal processing tasks, audio processing tasks, computer vision tasks, physical simulation tasks, statistical calculation tasks, neural network tasks and cryptography tasks.

A task can be designated as "protected" or "non-protected". A protected task may be a task for which the processing system is to be configured to operate such that it is capable of identifying one or more faults that might exist during the processing of that task - e.g. such that appropriate action(s) can be timely taken to recover from those faults, and/or such that faulty or defective parts can be identified and replaced. For example, a protected task may be a task that is to be processed at the processing system in a manner that satisfies a predefined safety level. A non-protected task may be a task for which it is not necessary for the processing system to be configured to operate such that it is capable of identifying one or more faults that might exist during the processing of that task. Whether a task is designated as protected or non-protected may depend on which of processes 106 initiated that task. For example, a task initiated by a safety-critical process may be designated a protected task, whilst a task initiated by a non-safety-critical process may be designated a non-protected task. That is, a protected task may be referred to herein as a "safety-critical" task, and a non-protected task may be referred to herein as a "non-safety-critical" task. That said, it is to be understood that a task need not be safety-critical in order to be designated as protected. For example, in a super-computing / data centre application, a task may relate to the processing of data that could affect a subsequent high-value financial decision, and so it may be desirable to designate such a task as being protected. A user of the processing system 100 (e.g. a programmer of each of processes 106) may determine whether tasks initiated by a process are to be designated as "protected" or "non-protected".

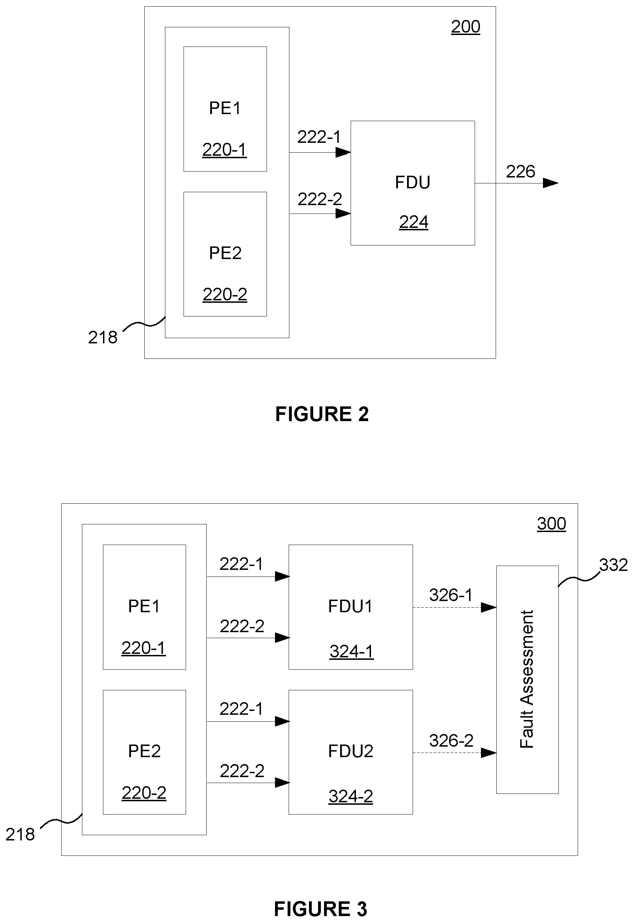

Figure 2 shows a typical processing system configured to process protected tasks. Figure 2 is a simplified schematic, showing a subset of the components of processing system 200 for ease of illustration. Processing system 200 comprises processing logic 218 and a fault detection unit 224. Other hardware components of processing system 200 - such as memory, caches, buffers, registers, data buses, interconnects etc. - are not shown in Figure 2 for ease of illustration. The hardware components of processing system 200 may be controlled by software in a software environment (e.g. as described with reference to software environment 102 of Figure 1) (also not shown in Figure 2 for ease of illustration).

In Figure 2, processing logic 218 comprises a first processing element 220-1 and a second processing element 220-2. The first processing element 220-1 and the second processing element 220-2 may be identical (e.g. comprise identical hardware). Although only two processing elements are shown in Figure 2 for ease of illustration, it is to be understood that processing logic 218 may comprise more than two processing elements. In other examples (not shown in Figure 2) processing logic 218 may comprise a single processing element. Each processing element may be: a processing unit (e.g. a GPU, a CPU, a DSP, a TPU, etc.); a core of a processing unit (e.g. a core of a multi-core GPU, a core of a multi-core CPU, etc.); a processing instance (e.g. an individual "pipe") of a parallel processing engine (e.g. a parallel processing "pipeline") comprised by a processing unit; or any other suitable portion of processing hardware.

Each processing element may be operable to process a task. The processing elements can be arranged such that they can each perform a respective task at the same time (e.g. concurrently). Each processing element may comprise a plurality of configurable functional elements so as to enable that processing element to be configured to perform a range of different processing actions. A processing element may process a task by performing a set of actions on a portion of data for the task. The set of actions may be defined as appropriate to a given task. A processing element may be configured by means of, for example, a software driver of the processing system (e.g. such as driver 110 described with reference to Figure 1) passing appropriate commands to that processing element so as to enable/disable the functional elements of that processing element so as to cause it to perform different sets of processing actions. Each processing element may be able to process tasks independently of any other processing element. That is, one processing element processing a task may not cooperate with another processing element in order to process that task (e.g. an individual task may not be processed in parallel at more than one processing element, although an individual task could be processed in parallel at a single processing element).

As described herein, a protected task may be a task for which the processing system is to be configured to operate such that it is capable of identifying one or more faults that might exist during the processing of that task. To achieve this, processing logic 218 can be configured to process each protected task first and second times so as to generate, respectively, first and second processed outputs 222-1 and 222-2. In an example, processing a protected task first and second times may comprise duplicating that protected task so as to generate a first (e.g. mission) protected task and a second (e.g. redundant) protected task and providing those duplicate protected tasks to the processing logic for processing. In an example, duplicating a protected task may comprise creating a copy of that task. For example, the protected task may be processed for the first time as the first (e.g. mission) protected task, and the second (e.g. redundant) protected task for processing for the second time may be defined by a copy of each instruction or line of code defining the protected task. In another example, duplicating a protected task may comprise invoking the protected task for processing twice (e.g. without creating a copy of the protected task). That is, a protected task may be defined by a program stored in memory (e.g. memory 112 shown in Figure 1). A protected task can be invoked for processing by providing the processing logic with a reference to that program in memory. Thus, a protected task can be duplicated by providing that reference to memory to a processing element that is to process the protected task for the first time, and providing the same reference to memory to a processing element that is to process the protected task for the second time. A processed output may be a final output for the processing of that task, or intermediate output data generated during the processing of that task.

In the example shown in Figure 2, first processing element 220-1 may be configured to process a protected task for the first time so as to generate a first processed output 222-1 for that protected task, and second processing element 220-2 may be configured to process that protected task for the second time so as to generate a second processed output 222-2 for that protected task. The first processing element 220-1 and the second processing element 220-2 may be configured to perform the same set of actions on the same portion of data (e.g. duplicates of the same data) when processing the protected task, respectively, for the first and second times. The processing performed by the first and second processing elements when processing the protected task first and second times may or may not be concurrent. In an alternative example (not shown in Figure 2), a single processing element may be configured to process a protected task for the first and second times (e.g. in series, non-concurrently - in order to expose transient faults occurring between processing the protected task first and second times) so as to generate, respectively, first and second processed outputs. The single processing element may be configured to perform the same set of actions on the same portion of data (e.g. duplicates of the same data) when processing the protected task for the first and second times.

In order to identify whether one or more faults existed during the processing of a protected task, fault detection unit 224 can be configured to compare the first and second processed outputs 222-1 and 222-2 for that protected task (e.g. to determine whether the first and second processed outputs 222-1 and 222-2 for that protected task match), and generate a signal 226 indicative of whether said first and second processed outputs 222-1 and 222-2 match. In an example, fault detection unit 224 may directly compare the first and second processed outputs 222-1 and 222-2 for a respective protected task. For example, each processed output may comprise a plurality of bits, and the fault detection unit 224 may be configured to perform a bit-by-bit comparison of the first and second processed outputs 222-1 and 222-2 - e.g. to determine whether the respective bits in each bit position of those two processed outputs match (e.g. are the same). In another example, the fault detection unit 224 may indirectly compare the first and second processed outputs 222-1 and 222-2 for a respective protected task. For example, the fault detection unit 224 may form first and second signatures (e.g. checksums, hashes, cyclic redundancy checks (CRCs), or fingerprint calculations, etc.) which are characteristic of the first and second processed outputs 222-1 and 222-2, respectively. The fault detection unit 224 may then compare said first and second signatures (e.g. by performing a bit-by-bit comparison, as described herein, of the first and second signatures) to determine whether the first and second processed outputs 222-1 and 222-2 match.

A signal 226 indicative of matching first and second processed outputs 222-1 and 222-2 for a protected task suggests that no faults existed at the processing logic 218 during the processing of that protected task. In this case, one or both of the first and second processed outputs 222-1 and 222-2 may be stored as a processed output for that protected task.

A signal 226 indicative of non-matching (e.g. different) first and second processed outputs 222-1 and 222-2 for a protected task suggests that a fault existed at the processing logic 218 (e.g. at the first processing element 220-1 and/or at the second processing element 220-2, and/or on the datapath between one or both of the processing elements and the fault detection unit 224) during the processing of that protected task. In this case, signal 226 may be referred to as a fault signal. A fault signal may be used in any manner by processing system 200 and/or by a system comprising the processing system 200. For example, on a fault signal being raised by fault detection unit 224, the processing system 200 may: discard the processed outputs formed in respect of the respective protected task; cause that protected task to be resubmitted to the processing logic 218 for reprocessing; "reset" itself in order to return the processing system 200 to a known state; and/or forward the fault signal to an external safety handling system that can invoke a failure handling mode that renders the system comprising the processing system 200 safe (e.g. by causing an autonomous vehicle comprising the processing system 200 to safely slow down and pull over). Alternatively, or additionally, the processing system 200 and/or a system comprising the processing system 200 may log fault signals and the processing element(s) those faults are associated with - and, for example, if one or more processing elements exceed a predefined number of faults (perhaps within some defined time period), those one or more processing elements may be disabled or otherwise prevented from processing future protected tasks.

As would be appreciated by the skilled person, it is important that the fault detection unit 224 is functioning correctly. This is because a faulty fault detection unit could either mask faults existing in the processing logic by failing to identify those faults (e.g. by outputting signals indicative of matching processed outputs when the processed outputs are in fact non-matching), or incorrectly raise fault signals when the processing logic is functioning correctly (e.g. by outputting signals indicative of non-matching processed outputs when the processed outputs are in fact matching).

One way to verify that fault detection unit 224 is functioning correctly is to periodically perform a test (e.g. a "built-in self-test" (BIST)) on fault detection unit 224. For example, such a test may comprise inputting one or more predetermined test inputs into logic of fault detection unit 224 and assessing whether the resultant one or more outputs of that logic match one or more expected test outputs. However, in order to perform said testing, a fault detection unit typically needs to be placed into a "test mode". This means that the processing system must temporarily pause processing of protected tasks using processing logic 218 until fault detection unit 224 completes testing and exits its test mode. This type of testing is known as "intrusive" testing. This type of testing reduces the throughput and availability of a processing system.

Described herein is a processing system configured to process protected tasks, and a method of processing a protected task at a processing system, that are intended to address one or more of the problems identified in the preceding paragraphs.

Figure 3 shows an example processing system configured to process protected tasks according to the principles described herein. Figure 3 is a simplified schematic, showing a subset of the components of processing system 300 for ease of illustration. Processing system 300 comprises processing logic 218, a first fault detection unit 324-1, a second fault detection unit 324-2 and, optionally, a fault assessment unit 332. Other hardware components of processing system 300 - such as memory, caches, buffers, registers, data buses, interconnects etc. - are not shown in Figure 3 for ease of illustration. The hardware components of processing system 300 may be controlled by software in a software environment (e.g. as described with reference to software environment 102 of Figure 1) (also not shown in Figure 3 for ease of illustration).

Processing logic 218 shown in Figure 3 has the same properties as processing logic 218 described herein with reference to Figure 2. In particular, in Figure 3, processing logic 218 comprises a first processing element 220-1 and a second processing element 220-2. In other examples (not shown in Figure 3) processing logic 218 may comprise more than two processing elements, or a single processing element. Each processing element comprised by the processing logic 218 shown in Figure 3 has the same properties as the processing element(s) comprised by the processing logic 218 described with reference to Figure 2.

As described herein with reference to Figure 2, processing logic 218 shown in Figure 3 can be configured to process each protected task first and second times so as to generate, respectively, first and second processed outputs 222-1 and 222-2. The first and second processed outputs 222-1 and 222-2 can be provided to one or both of the first fault detection unit 324-1 and the second fault detection unit 324-2. In some examples, the first and second processed outputs 222-1 and 222-2 may follow the same datapath to the respective fault detection unit 324-1 / 324-2. In other examples, the first and second processed outputs 222-1 and 222-2 may follow different datapaths to the respective fault detection unit 324-1 / 324-2. For example, the first processed output 222-1 may be provided directly to the respective fault detection unit 324-1 / 324-2, whereas the second processed output 222-2 may be written to a memory before being read-back to the respective fault detection unit 324-1 / 324-2. This can advantageously also expose faults that might occur on the datapath to / from said memory.

First fault detection unit 324-1 is operable in a "mission mode" (e.g. a first fault detection unit mission mode) in which it is configured to compare the first and second processed outputs 222-1 and 222-2 for a respective protected task (e.g. to determine whether the first and second processed outputs 222-1 and 222-2 for that protected task match), and generate a first signal 326-1 indicative of whether said first and second processed outputs 222-1 and 222-2 match (e.g. are the same). As described herein with reference to fault detection unit 224 shown in Figure 2, the first fault detection unit 324-1 may directly, or indirectly, compare the first and second processed outputs 222-1 and 222-2 for a respective protected task.

Second fault detection unit 324-2 is operable in a "mission mode" (e.g. a second fault detection unit mission mode) in which it is configured to compare the first and second processed outputs 222-1 and 222-2 for a respective protected task (e.g. to determine whether the first and second processed outputs 222-1 and 222-2 for that protected task match), and generate a second signal 326-2 indicative of whether said first and second processed outputs 222-1 and 222-2 match (e.g. are the same). As described herein with reference to fault detection unit 224 shown in Figure 2, the second fault detection unit 324-2 may directly, or indirectly, compare the first and second processed outputs 222-1 and 222-2 for a respective protected task.

The first signal 326-1 and/or the second signal 326-2 are indicative of whether one or more faults existed in the processing system during processing of the respective protected task and/or when generating said first and second signals (as will be described further herein).

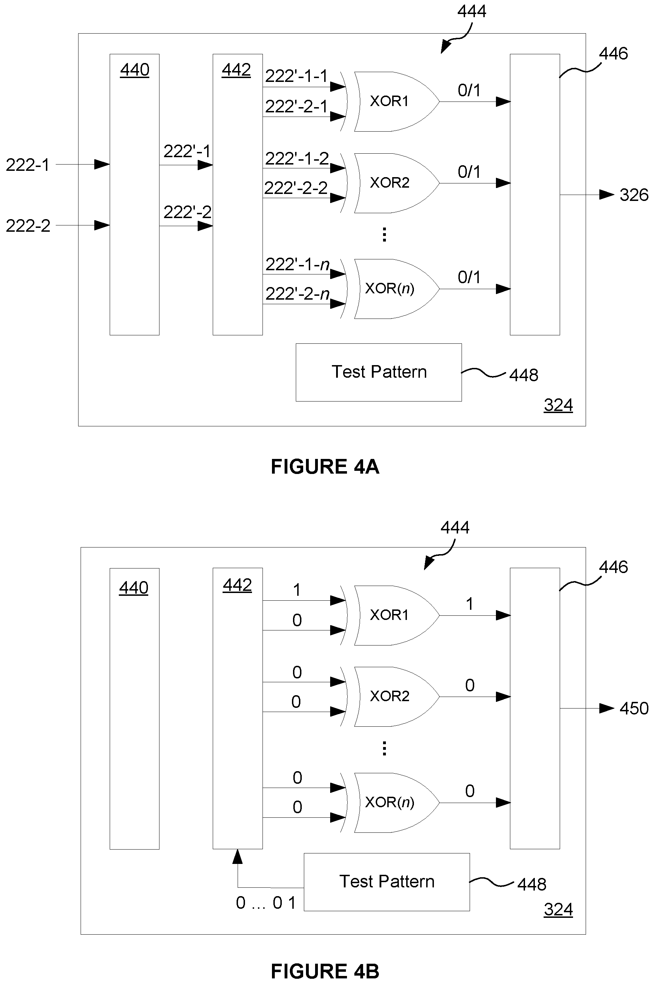

Figure 4A shows an example fault detection unit 324 operating in its mission mode. The first fault detection unit 324-1 and/or the second fault detection unit 324-2 shown in Figure 3 may have the same properties as fault detection unit 324 shown in Figure 4A.

As described herein, a fault detection unit may indirectly compare the first and second processed outputs 222-1 and 222-2 for a respective protected task. To achieve this, fault detection unit 324 comprises a signature unit 440, which can be configured to form first and second signatures 222'-1 and 222'-2 (e.g. checksums, hashes, cyclic redundancy checks (CRCs), or fingerprint calculations, etc. - as would be understood by the skilled person) which are characteristic of the first and second processed outputs 222-1 and 222-2, respectively. The first and second processed outputs 222-1 and 222-2, and the first and second signatures 222'-1 and 222'-2, may be multi-bit signals (e.g. bit-strings comprising a series of bits).

Fault detection unit 324 comprises bit routing logic 442 and bit comparison logic 444. In this specific example, bit comparison logic 444 comprises a plurality of XOR gates, labelled XOR1, XOR2 ... XOR(n). Bit comparison logic 444 may comprise any suitable number of XOR gates. Bit routing logic 442 is configured to route respective bits of each of the first and second signatures 222'-1 and 222'-2 to a respective XOR gate for comparison. For example, in the specific example shown in Figure 4A, bit routing logic 442 can route: the first (e.g. least significant) bit 222'-1-1 of the first signature 222'-1 and the first (e.g. least significant) bit 222'-2-1 of the second signature 222'-2-1 to the upper and lower inputs, respectively, of XOR1; the second bit 222'-1-2 of the first signature 222'-1 and the second bit 222'-2-2 of the second signature 222'-2-2 to the upper and lower inputs, respectively, of XOR2; and the *n*^{th} (e.g. most significant) bit 222'-1-n of the first signature 222'-1 and the *n*^{th} (e.g. most significant) bit 222'-2-n of the second signature 222'-2-2 to the upper and lower inputs, respectively, of XOR(n). Each XOR gate may output a first value (e.g. a "0" bit) when its two respective input bits match, and output a second value (e.g. "1" bit) when its two respective input bits do not match.

It is to be understood that the number of XOR gates comprised by bit comparison logic 444 need not equal the number of bits in each signature, as is the case in the preceding example. If the number of bits in each signature exceeds the number of XOR gates, the bits of those signatures can be routed to respective XOR gates over a number of cycles (e.g. "in batches").

Fault detection unit 324 comprises further logic 446 which consolidates the outputs from the bit comparison logic 444 in order to generate a signal 326 indicative of whether the first and second processed outputs 222-1 and 222-2 match. For example, further logic 446 may output a signal 326 indicative of matching first and second processed outputs 222-1 and 222-2 when the outputs of all of the XOR gates comprised by bit comparison logic 444 indicate that their two respective input bits match - e.g. when all of the XOR gates output a first value (e.g. a "0" bit). Further logic 446 may output a signal 326 indicative of non-matching first and second processed outputs 222-1 and 222-2 when the outputs of any of the XOR gates comprised by bit comparison logic 444 indicate that their two respective input bits do not match - e.g. when any of the XOR gates output a second value (e.g. a "1" bit).

In some examples, signal 326 may be a single-bit signal - e.g. having a first value (e.g. a "0" bit) that indicates matching processed outputs or a second value (e.g. a "1" bit) indicating non-matching processed outputs. In other examples, signal 326 may be multi-bit.

In Figure 4A, fault detection unit 324 is shown indirectly comparing the first and second processed outputs 222-1 and 222-2 for a respective protected task. In alternative examples in which a fault detection unit is operable in a mission mode in which it is configured to directly compare the first and second processed outputs 222-1 and 222-2, that fault detection logic need not comprise signature unit 440, such that the bit routing logic 442 is configured to route the bits of the first and second processed outputs 222-1 and 222-2 themselves (e.g. rather than the bits of signatures characteristic of those outputs) to bit comparison logic 444 for comparison.

Fault detection unit 324 in Figure 4A is also shown comprising a test pattern generator unit 448 (as will be described further herein), that is not used in the mission mode.

It is to be understood that the arrangement of logic in fault detection unit 324 shown in Figure 4A is described by way of a specific example only. There are numerous other suitable arrangements of logic that could be used to compare two processed outputs.

Returning to Figure 3, first fault detection unit 324-1 may also be operable in a "test mode" (e.g. a first fault detection unit test mode) in which a test (e.g. a test of the first fault detection unit) is performed to assess whether the first fault detection unit 324-1 is functioning correctly. Second fault detection unit 324-2 may also be operable in a "test mode" (e.g. a second fault detection unit test mode) in which a test (e.g. a test of the second fault detection unit) is performed to assess whether the second fault detection unit 324-2 is functioning correctly. In an example, such a test (e.g. of the first fault detection unit, or of the second fault detection unit) may comprise inputting (e.g. injecting) one or more predetermined test inputs into logic of the respective fault detection unit 324-1 / 324-2, and assessing whether the resultant one or more outputs of that logic match one or more expected test outputs. In some examples, the one or more predetermined test inputs can be generated by a test pattern generator unit comprised by the respective fault detection unit 324-1 / 324-2 (as will be described further herein). In other examples, the one or more predetermined test inputs may be generated, and/or stored, externally to the fault detection unit and provided to the fault detection unit.

Figure 4B shows an example fault detection unit 324 operating in its test mode. The first fault detection unit 324-1 and/or the second fault detection unit 324-2 shown in Figure 3 may have the same properties as fault detection unit 324 shown in Figure 4B.

The fault detection unit 324 shown in Figure 4B comprises the same components as the fault detection unit 324 shown in Figure 4A. That is, the fault detection unit 324 shown in Figure 4B comprises: a signature unit 440 (optionally), bit routing logic 442, bit comparison logic 444, further logic 446 and a test pattern generator unit 448. The test pattern generator unit 448 may be implemented using a shift register.

When fault detection unit 324 is operating in its test mode, test pattern generator unit 448 may generate a series of predetermined test inputs. In a specific example, test pattern generator unit 448 generates a multi-bit signal having the same number of bits as the number of XOR gates in bit comparison logic 444. At each clock (e.g. "cycle", or "clock cycle"), the generated predetermined test input may include a single bit of a second value (e.g. "1" bit), and otherwise bits of a first value (e.g. "0" bits). In the first clock, the single bit of the second value (e.g. "1" bit) may be the least-significant-bit - e.g. 0 ... 0 1, as shown in Figure 4B. In each subsequent clock, the single bit of the second value (e.g. "1" bit) may be shifted (e.g. moved) one position to the left, until it is the most-significant bit in the *n*^{th} clock. For example, in the second clock, the predetermined test input may be 0 ... 1 0. In the *n*^{th} clock, the predetermined test input may be 1 ... 0 0.

In each clock, the test pattern generator unit 448 may provide the predetermined test input for that clock to the bit routing logic 442. In each clock, each bit in the predetermined test input is provided to an input (e.g. the upper input) in a respective XOR gate of the bit comparison logic 444, and a bit of the first value (e.g. a "0" bit) is input to the other input (e.g. lower input) of each of the XOR gates of the bit comparison logic 444. For example, in the specific example shown in Figure 4B, in the first clock, bit routing logic 442 can route: the first (e.g. least significant) bit (e.g. the "1" bit) of the predetermined test input and a bit of the first value (e.g. a "0" bit) to the upper and lower inputs, respectively, of XOR1; the second bit (e.g. a "0" bit) of the predetermined test input and a bit of the first value (e.g. a "0" bit) to the upper and lower inputs, respectively, of XOR2; and the *n*^{th} (e.g. most significant) bit (e.g. a "0" bit) of the predetermined test input and a bit of the first value (e.g. a "0" bit) to the upper and lower inputs, respectively, of XOR(*n*). This means that, in each clock, if the fault detection unit 324 is functioning correctly, one of the XOR gates of its bit comparison logic 444 should indicate that its inputs do not match (e.g. output a "1" value), with all of the other XOR gates of its bit comparison logic 444 indicating that their inputs match (e.g. output a "0" value). For example, in the specific example shown in Figure 4B, in the first clock, if fault detection unit 324 is functioning correctly XOR1 would indicate that its inputs ("1" and "0") do not match (e.g. output a "1" value), whilst all of XOR2 to XOR(*n*) would indicate that their inputs ("0" and "0") match (e.g. output a "0" value). As such, the test can indicate if any of the XOR gates are "stuck" to a "0" (e.g. if they output a "0" when it is known they received non-matching inputs).

The test may be performed over 2*n* clocks. In the first *n* clocks of said 2*n* clocks, bits of the predetermined test input may be provided to a first input (e.g. the upper input) of each of the XOR gates of the bit comparison logic 444 and bits of the first value (e.g. "0" bits) provided to a second input (e.g. the lower input) of each of the XOR gates of the bit comparison logic 444. In the second *n* clocks of said 2n clocks, bits of the predetermined test input may be provided to the second input (e.g. the lower input) of each of the XOR gates of the bit comparison logic 444 and bits of the first value (e.g. "0" bits) provided to the first input (e.g. the upper input) of each of the XOR gates of the bit comparison logic 444.

Further logic 446 consolidates the outputs from the bit comparison logic 444 in order to generate a signal 450 indicative of whether the fault detection unit 324 is functioning correctly. In an example, further logic 446 may output a signal 450 for each clock during which the test is performed. In this example, further logic 446 may output a signal 450 indicative of the fault detection unit 324 functioning correctly if, in that clock, one of the XOR gates of bit comparison logic 444 indicates that its inputs do not match (e.g. output a "1" value), with all of the other XOR gates of bit comparison logic 444 indicating that their inputs match (e.g. output a "0" value). In this example, further logic 446 may output a signal 450 indicative of the fault detection unit 324 functioning incorrectly if, in that clock, all of the XOR gates of bit comparison logic 444 indicate that their inputs match (e.g. output a "0" value). In this example, said signal 450 may be a single-bit signal - e.g. having a first value (e.g. a "0" bit) that indicates the fault detection unit 324 is functioning correctly or a second value (e.g. a "1" bit) that indicates the fault detection unit 324 is functioning incorrectly. In an alternative example, further logic 446 may output a signal 450 corresponding to a number of clocks during which the test is performed. In this alternative example, further logic 446 may output a signal 450 indicative of the fault detection unit 324 functioning correctly if, in each clock of said number of clocks, one of the XOR gates of bit comparison logic 444 indicated that its inputs did not match (e.g. output a "1" value), with all of the other XOR gates of bit comparison logic 444 indicating that their inputs match (e.g. output a "0" value). In this alternative example, further logic 446 may output a signal 450 indicative of the fault detection unit 324 functioning incorrectly if, in any clock of said number of clocks, all of the XOR gates of bit comparison logic 444 indicated that their inputs matched (e.g. output a "0" value). In this alternative example, said signal 450 may be a single-bit signal - e.g. having a first value (e.g. a "0" bit) that indicates the fault detection unit 324 is functioning correctly or a second value (e.g. a "1" bit) that indicates the fault detection unit 324 is functioning incorrectly. Alternatively, signal 450 may be a multi-bit signal where each bit of that signal relates to a clock of said number of clocks - e.g. comprising exclusively bits of a first value (e.g. "0" bits) to indicate the fault detection unit 324 is functioning correctly, or one or more bits of a second value (e.g. "1" bits) to indicate the fault detection unit 324 is functioning incorrectly. The signals 450 described in this paragraph could also be used to determine which of the XOR gates of bit comparison logic 444 is functioning incorrectly - e.g. on the basis that it is known which XOR gate received non-matching inputs in each clock.

It is to be understood that the test described herein with reference to Figure 4B is a specific example. Various other specific tests could be performed to verify whether a fault detection unit is functioning correctly. For example, in one clock, a bit of a first value (e.g. a "0" bit) could be provided to a first input (e.g. the upper input) of each of the XOR gates of the bit comparison logic 444 and a bit of a second value (e.g. a "1" bit) could be provided to a second input (e.g. the lower input) of each of the XOR gates of the bit comparison logic 444. A signal indicative of the fault detection unit 324 functioning incorrectly could be output if any of the XOR gates of bit comparison logic 444 indicated that their inputs matched (e.g. output a "0" value).

Returning to Figure 3, the processing system 300 can be operable in a first protected mode. In the first protected mode, processing logic 218 is configured to process each protected task first and second times so as to generate, respectively, first and second processed outputs 222-1 and 222-2 - as described herein. In the first protected mode, the first fault detection unit 324-1 and the second fault detection unit 324-2 operate, concurrently (e.g. at the same time, or simultaneously), in their respective mission modes - as described herein. In this way, for each protected task processed in the first protected mode, a respective first and second signal 326-1 and 326-2 can be generated, each being indicative of whether the first and second processed outputs 222-1 and 222-2 for that protected task match - as described herein.

In the first protected mode, the first signal 326-1 and the second signal 326-2 for a respective protected task can be compared (e.g. in order to determine whether said first and second signals 326-1 and 326-2 match) in order to assess whether a fault existed at the first fault detection unit 324-1 and/or the second fault detection unit 324-2 when generating said first and second signals 326-1 and 326-2. Said comparison of the first and second signals 326-1 and 326-2 for a respective protected task could be performed by fault assessment unit 332. That is, the first signal 326-1 and the second signal 326-2 for a respective protected task can be provided to (e.g. sent to or routed to) a fault assessment unit (e.g. fault assessment unit 332, or an equivalent fault assessment unit comprised by an external safety handling system) for comparison in order to assess whether a fault existed at the first fault detection unit 324-1 and/or the second fault detection unit 324-2 when generating the first and second signals. Fault assessment unit 332 may directly, or indirectly, (as described herein) compare the first and second signals 326-1 and 326-2 for a respective protected task. Fault assessment unit 332 may perform a bit-by-bit comparison (as described herein) of the first and second signals 326-1 and 326-2, or signatures representative thereof, for a respective protected task. As described herein, each of the first and second signals 326-1 and 326-2 could be single-bit signals (e.g. having a first value that indicates matching processed outputs or a second value indicating non-matching processed outputs), and so said comparison could be implemented cheaply in hardware (e.g. using a single XOR gate).

If the fault assessment unit 332 determines that the first and second signals 326-1 and 326-2 for a respective protected task match, this suggests that no faults existed at the first fault detection unit 324-1 and the second fault detection unit 324-2 when generating said signals. In this case, it can be assumed that the first fault detection unit 324-1 and the second fault detection unit 324-2 are functioning correctly.

If the fault assessment unit 332 determines that the first and second signals 326-1 and 326-2 for a respective protected task do not match (e.g. are different), this suggests that a fault existed at the first fault detection unit 324-1 and/or the second fault detection unit 324-2 when generating said signals. In other words, that situation indicates that one or both of the first fault detection unit 324-1 and the second fault detection unit 324-2 are not functioning correctly (e.g. either masking faults existing in the processing logic by failing to identify those faults, or incorrectly raising fault signals when the processing logic is functioning correctly). In this way, the first protected mode can advantageously expose faults existing in the first fault detection unit 324-1 and/or the second fault detection unit 324-2, and can do so without needing to temporarily pause processing of protected tasks in order to test either of the fault detection units. In this case, the fault assessment unit 332 may issue a fault signal indicating that one or both of the first fault detection unit 324-1 and the second fault detection unit 324-2 are not functioning correctly. Such a fault signal may be used in any manner by processing system 300 and/or by a system comprising the processing system 300. For example, the processing system 300 may: discard the processed outputs formed in respect of the respective protected task; cause that protected task to be resubmitted to the processing logic 218 for reprocessing; "reset" the first fault detection unit 324-1 and/or the second fault detection unit 324-2 in order to return them to known states; and/or forward the fault signal to an external safety handling system that can invoke a failure handling mode that renders the system comprising the processing system 300 safe. Alternatively, or additionally, the processing system 300 and/or a system comprising the processing system 300 may log fault signals associated with the fault detection units.

As shown in Figure 3, fault assessment unit 332 could be comprised by the processing system 300 - although it is to be understood that this need not be the case. Alternatively, the first and second signals 326-1 and 326-2 could be provided to an external safety handling system for assessment (e.g. comparison) - e.g. where that external safety handling system comprises a fault assessment unit equivalent to fault assessment unit 332 described herein.

In the first protected mode, the first signal 326-1 and/or the second signal 326-2 can also be used to assess whether a fault existed at the processing logic 218 during processing of the respective protected task. Said assessment could also be performed by fault assessment unit 332, or by an equivalent fault assessment unit comprised by an external safety handling system. That is, the first signal 326-1 and/or the second signal 326-2 for a respective protected task can be provided to (e.g. sent to or routed to) a fault assessment unit (e.g. fault assessment unit 332, or an equivalent fault assessment unit comprised by an external safety handling system) for assessment in order to assess whether a fault existed at the processing logic 218 during processing of the respective protected task. A signal (e.g. the first and/or second signal 326-1 / 326-2) indicative of matching first and second processed outputs 222-1 and 222-2 for a protected task suggests that no faults existed at the processing logic 218 during the processing of that protected task. In this case, one or both of the first and second processed outputs 222-1 and 222-2 may be stored as a processed output for that protected task. A signal 326-1 / 326-2 indicative of non-matching (e.g. different) first and second processed outputs 222-1 and 222-2 for a protected task suggests that a fault existed at the processing logic 218 (e.g. at the first processing element 220-1 and/or at the second processing element 220-2, and/or on the datapath between one or both of the processing elements and the fault detection unit) during the processing of that protected task. In this case, signal 326-1 / 326-2 may be referred to as a fault signal. Such a fault signal may be used in any manner by processing system 300 and/or by a system comprising the processing system 300. For example, on a fault signal being raised by the first fault detection unit 324-1 and the second fault detection unit 324-2, the processing system 300 may: discard the processed outputs formed in respect of the respective protected task; cause that protected task to be resubmitted to the processing logic 218 for reprocessing; "reset" itself or one or more of the processing elements in order to return itself / them to a known state; and/or forward the fault signal to an external safety handling system that can invoke a failure handling mode that renders the system comprising the processing system 300 safe. Alternatively, or additionally, the processing system 300 and/or a system comprising the processing system 300 may log fault signals and the processing element(s) those faults are associated with - and, for example, if one or more processing elements exceed a predefined number of faults (perhaps within some defined time period), those one or more processing elements may be disabled or otherwise prevented from processing future protected tasks.

The processing system 300 can be operable in a second protected mode. In the second protected mode, processing logic 218 is configured to process each protected task first and second times so as to generate, respectively, first and second processed outputs 222-1 and 222-2 - as described herein. In the second protected mode, one of the first fault detection unit 324-1 and the second fault detection unit 324-2 operates in its test mode so as to assess whether that fault detection unit is functioning correctly, whilst, concurrently (e.g. at the same time, or simultaneously), the other of the first fault detection unit 324-1 and the second fault detection unit 324-2 operates in its mission mode so as to generate the respective first or second signal 326-1 or 326-2 (e.g. in the manner described herein). That is, at one time when the processing system 300 is operating in the second protected mode, the first fault detection unit 324-1 may operate in its test mode, whilst, concurrently, the second fault detection unit 324-2 operates in its mission mode. At another time when the processing system 300 is operating in the second protected mode, the second fault detection unit 324-2 may operate in its test mode, whilst, concurrently, the first fault detection unit 324-1 operates in its mission mode. In other words, when the processing system 300 is operating in the second protected mode, only one of the first signal 326-1 and the second signal 326-2 for a respective protected task may be generated.

In the second protected mode, the generated first or second signal 326-1 or 326-2 for a respective protected task can be used to assess whether a fault existed at the processing logic during processing of that protected task. Said assessment could be performed by fault assessment unit 332, or by an equivalent fault assessment unit comprised by an external safety handling system. That is, the generated first or second signal 326-1 or 326-2 for a respective protected task can be provided to (e.g. sent to or routed to) a fault assessment unit (e.g. fault assessment unit 332, or an equivalent fault assessment unit comprised by an external safety handling system) for assessment in order to assess whether a fault existed at the processing logic 218 during processing of the respective protected task. A signal (e.g. the first or second signal 326-1 / 326-2) indicative of matching first and second processed outputs 222-1 and 222-2 for a protected task suggests that no faults existed at the processing logic 218 during the processing of that protected task. In this case, one or both of the first and second processed outputs 222-1 and 222-2 may be stored as a processed output for that protected task. A signal 326-1 / 326-2 indicative of non-matching (e.g. different) first and second processed outputs 222-1 and 222-2 for a protected task suggests that a fault existed at the processing logic 218 (e.g. at the first processing element 220-1 and/or at the second processing element 220-2, and/or on the datapath between one or both of the processing elements and the fault detection unit) during the processing of that protected task. In this case, signal 326-1 / 326-2 may be referred to as a fault signal. Such a fault signal may be used in any manner by processing system 300 and/or by a system comprising the processing system 300 - as described herein.

In the second protected mode, the fault detection unit that is operating in its test mode may generate a signal indicative of that fault detection unit functioning incorrectly (e.g. as described herein with reference to Figure 4B). Such a signal may also be referred to as a fault signal. Such a fault signal may be used in any manner by processing system 300 and/or by a system comprising the processing system 300. For example, the processing system 300 may "reset" the fault detection unit that is functioning incorrectly in order to return that fault detection unit to a known state. Alternatively, or additionally, the processing system 300 and/or a system comprising the processing system 300 may log fault signals and the fault detection unit those faults are associated with - and, for example, if a fault detection unit exceeds a predefined number of faults (perhaps within some defined time period), that fault detection unit may be disabled.

In this way, the second protected mode can advantageously enable one of first fault detection unit 324-1 and the second fault detection unit 324-2 to be tested to verify whether that fault detection unit is functioning correctly, without needing to temporarily pause processing of protected tasks using processing logic 218 until that fault detection unit completes testing and exits its test mode. This is because the other of the first fault detection unit 324-1 and the second fault detection unit 324-2 concurrently operates in its mission mode in which it can continue to compare first and second processed outputs for respective protected tasks. As such, this type of testing can be referred to as "non-intrusive" testing. That is, the test performed on a fault detection unit when the processing system is operating in the second protected mode may be referred to as a non-intrusive test. This use of non-intrusive testing improves the throughput of the processing system 300 (e.g. relative to the typical processing system 200 described herein).

The processing system 300 can be configured to process a protected task. The processing system 300 can be configured to operate in the first protected mode (as described herein) during the processing of that protected task. Alternatively, the processing system 300 can be configured to operate in the second protected mode (as described herein) during the processing of that protected task.

The processing system 300 can be configured to process a series of protected tasks. In other words, the processing system 300 can be configured to process a plurality of protected tasks over a period of time. During the processing of a series of protected tasks, the processing system 300 can be configured to operate in both the first protected mode and the second protected mode (e.g. mutually exclusively). For example, during the processing of a series of protected tasks, the processing system 300 may be configured to alternate between operating in the first protected mode and the second protected mode. The processing system 300 can be configured to operate (e.g. using the first protected mode and the second protected mode) such that, throughout the processing of a series of protected tasks, at least one of the first fault detection unit 324-1 and the second fault detection unit 324-2 is operating in its respective mission mode (e.g. at any given time). This means that various types of faults that might exist in the first and second fault detection units 324-1 / 324-2 can be detected without need to temporarily pause the processing of that series of protected tasks for intrusive testing - thereby improving throughput of the processing system 300. For example, the processing system can be configured to operate (e.g. using the first protected mode and the second protected mode) such that, during processing of the series of protected tasks: for a first period of time, (e.g. by operating in the first protected mode) both the first fault detection unit 324-1 and the second fault detection unit 324-2 concurrently operate in their respective mission modes; for a second period of time, (e.g. by operating in the second protected mode) the first fault detection unit 324-1 operates in its mission mode and, concurrently, the second fault detection unit 324-2 operates in its test mode; and for a third period of time, (e.g. by operating in the second protected mode) the second fault detection unit 324-2 operates in its mission mode and, concurrently, the first fault detection unit 324-1 operates in its test mode. Said first, second and third periods of time may have any suitable relative durations. In a specific example for illustration purposes only, the first period of time may encompass 98% of the total period of time during which a series of protected tasks are being processed, with the second and third periods of time each encompassing 1% of that total period of time. In an example, the processing system 300 may be configured to alternate between operating in the first and second protected modes periodically during the processing of a series of protected tasks - e.g. in a predetermined manner. For example, the processing system 300 may be configured to: operate in the first protected mode for X clocks; subsequently operate in the second protected mode for Y clocks with the first fault detection unit 324-1 operating in its test mode; and subsequently operate in the second protected mode for a further Y clocks with the second fault detection unit 324-2 operating in its test mode. In a specific example, X may equal 980,000 and Y may equal 10,000 - although it is to be understood that X and Y may have any suitable value. In another example, the processing system 300 may be configured to preferentially operate in the first protected mode until a fault signal is raised indicating that a fault exists in one or both of the first fault detection unit 324-1 and the second fault detection unit 324-2, at which point the processing system 300 may be configured to swap into operating in the second protected mode in order to identify which fault detection unit 324-1 / 324-2 is faulty.

It is to be understood that the processing system 300 can also be configured to process non-protected tasks. To achieve this, the processing logic 218 can be configured to process each non-protected task a single time so as to generate a single processed output. Since there is no need to use the first or second fault detection units 324-1 and 324-2 to compare processed outputs for non-protected tasks, the processing system 300 can be operable in a non-protected mode in which the first fault detection unit 324-1 and the second fault detection unit 324/2 operate, concurrently, in their respective test modes so as to assess whether those fault detection units are functioning correctly. This advantageously means that said testing of the fault detection units can be completed more quickly whilst the processing logic is processing non-protected tasks.

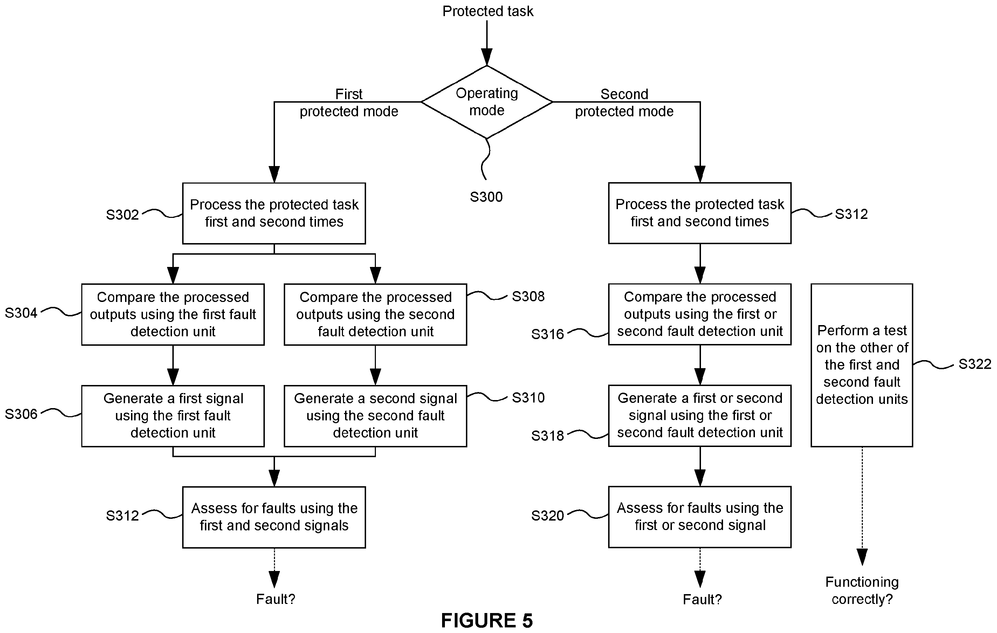

Figure 5 shows an example method of processing a protected task at a processing system (e.g. the processing system 300 described herein) according to the principles described herein. That is, Figure 5 shows a method of processing a protected task at a processing system (e.g. processing system 300) comprising processing logic (e.g. processing logic 218) configured to process protected tasks first and second times so as to generate, respectively, first and second processed outputs, a first fault detection unit (e.g. first fault detection logic 324-1) operable in a mission mode in which it is configured to compare first and second processed outputs for a respective protected task and generate a first signal indicative of whether said first and second processed outputs match, and a second fault detection unit (e.g. second fault detection logic 324-2) operable in a mission mode in which it is configured to compare the first and second processed outputs for the respective protected task and generate a second signal indicative of whether said first and second processed outputs match.

In step S300 it can be determined whether the processing system is operating in the first protected mode (as described herein) or the second protected mode (as described herein).

In response to determining that the processing system is operating in the first protected mode, in step S302 the protected task can be processed, using the processing logic, first and second times so as to generate, respectively, first and second processed outputs (as described herein).

In step S304, the first and second processed outputs for the protected task can be compared using the first fault detection unit (as described herein). In step S306, the first fault detection unit can generate a first signal indicative of whether said first and second processed outputs match (as described herein).

In step S308, the first and second processed outputs for the protected task can also be compared using the second fault detection unit (as described herein). In step S310, the second fault detection unit can generate a second signal indicative of whether said first and second processed outputs match (as described herein). Steps S308 and/or S310 may be performed concurrently with steps S304 and/or S306 described herein.

In step S312, it can be assessed (as described herein), in dependence on the first signal and the second signal, whether one or more faults existed at the processing logic during processing of the protected task and/or at the first processing unit and/or the second processing unit when generating the first and second signals. For example, step S312 may comprise providing the first signal and the second signal to a fault assessment unit (e.g. fault assessment unit 332, or an equivalent fault assessment unit comprised by an external safety handling system) for comparison in order to assess whether a fault existed at the first fault detection unit and/or the second fault detection unit when generating the first and second signals. A fault signal (as described herein) can be raised if one or more faults are detected in step S312.

Alternatively, returning to step S300, in response to determining that the processing system is operating in the second protected mode, in step S312 the protected task can be processed, using the processing logic, first and second times so as to generate, respectively, first and second processed outputs (as described herein).

In step S316, the first and second processed outputs for the protected task can be compared using the first fault detection unit or the second fault detection unit (as described herein). In step S318, the first fault detection unit or the second fault detection unit can generate, respectively, a first signal or a second signal indicative of whether said first and second processed outputs match (as described herein).

In step S320, it can be assessed (as described herein), in dependence on the generated first or second signal, whether one or more faults existed at the processing logic during processing of the protected task. For example, step S320 may comprise providing the generated first or second signal to a fault assessment unit (e.g. fault assessment unit 332, or an equivalent fault assessment unit comprised by an external safety handling system) for assessment in order to assess whether a fault existed at the processing logic during processing of the further protected task. A fault signal (as described herein) can be raised if one or more faults are detected in step S320.

In step S322, a test (as described herein) can be performed on the other of the first fault detection unit or the second fault detection unit to assess whether that fault detection unit is functioning correctly. Step S322 can be performed concurrently with any of steps S312, S316, S318 and/or S320 described herein. A fault signal (as described herein) can be raised if it is determined in step S322 that that fault detection unit is functioning incorrectly.

As described herein, a series of protected tasks may be processed at the processing system. The processing system need not be operating in the same protected mode when processing each protected task in that series of protected tasks. That is, for example, for a protected task in a series of protected tasks, it may be determined in step S300 that the processing system is operating in the first protected mode, and so that protected task can be processed in accordance with steps S302 to S312 as described herein. For a further (e.g. first subsequent) protected task in the series of protected tasks, it may be determined in step S300 that the processing system is operating in the second protected mode (e.g. with the second fault detection unit operating in its test mode), and so that further protected task can be processed in accordance with steps S312 to S322 as described herein. For an additional (e.g. second subsequent) protected task in the series of protected tasks, it may be determined in step S300 that the processing system is operating in the second protected mode (e.g. with the first fault detection unit operating in its test mode), and so that additional protected task can also be processed in accordance with steps S312 to S322 as described herein.

As described herein, one or more non-protected tasks can also be processed at the processing system described herein. For example, the processing system may process a series of tasks, that series of tasks comprising one or more protected tasks and one or more non-protected tasks. The processing system described herein may operate in a non-protected mode in order to process a non-protected task. In the non-protected mode, a non-protected task may be processed, using the processing logic, a single time so as to generate a single processed output. In the non-protected mode, a test can be performed on the first fault detection unit to assess whether the first fault detection unit is functioning correctly. Also, concurrently to performing said test on the first fault detection unit, a test can be performed on the second fault detection unit to assess whether the second fault detection unit is functioning correctly.

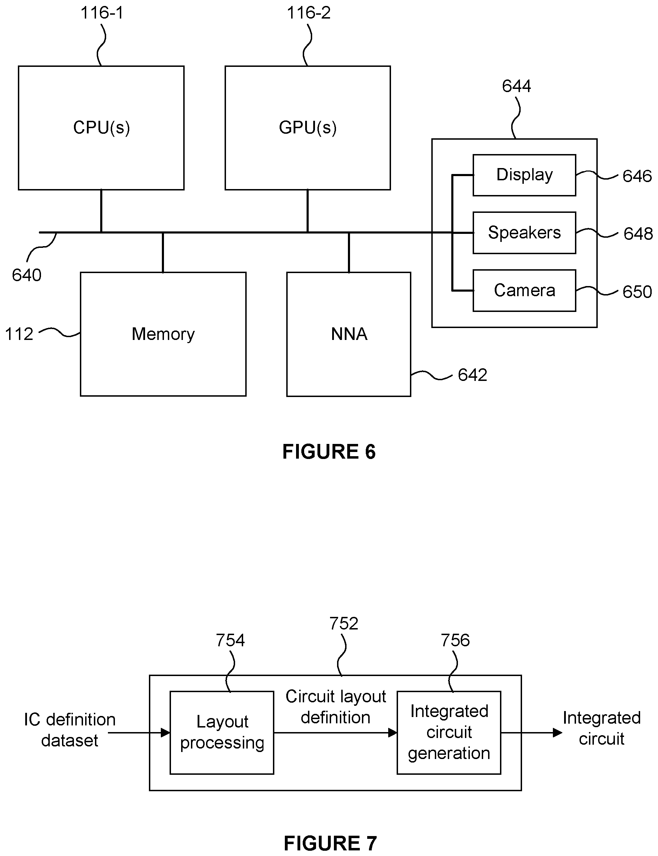

Figure 6 shows a computer system in which processing systems described herein may be implemented. The computer system comprises CPU(s) 116-1, GPU(s) 116-2, memory 112, neural network accelerator (NNA) 642 and other devices 644, such as a display 646, speakers 648 and a camera 650. In other examples, one or more of the depicted components may be omitted from the system. The components of the computer system can communicate with each other via a communications bus 640.

The processing systems, fault detection units and computer system of Figures 1, 2, 3, 4A, 4B and 6 are shown as comprising a number of functional blocks. This is schematic only and is not intended to define a strict division between different logic elements of such entities. Each functional block may be provided in any suitable manner. It is to be understood that intermediate values described herein as being formed by a processing system need not be physically generated by the processing system at any point and may merely represent logical values which conveniently describe the processing performed by the processing system unit between its input and output.

The processing system described herein may be embodied in hardware on an integrated circuit. The processing system described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing system configured to perform any of the methods described herein, or to manufacture a processing system comprising any apparatus described herein. An integrated circuit definition dataset may be, for example, an integrated circuit description.

Therefore, there may be provided a method of manufacturing, at an integrated circuit manufacturing system, a processing system as described herein. Furthermore, there may be provided an integrated circuit definition dataset that, when processed in an integrated circuit manufacturing system, causes the method of manufacturing a processing system as described herein to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processing system as described herein will now be described with respect to Figure 7.

Figure 7 shows an example of an integrated circuit (IC) manufacturing system 752 which is configured to manufacture a processing system as described in any of the examples herein. In particular, the IC manufacturing system 752 comprises a layout processing system 754 and an integrated circuit generation system 756. The IC manufacturing system 752 is configured to receive an IC definition dataset (e.g. defining a processing system as described in any of the examples herein), process the IC definition dataset, and generate an IC according to the IC definition dataset (e.g. which embodies a processing system as described in any of the examples herein). The processing of the IC definition dataset configures the IC manufacturing system 752 to manufacture an integrated circuit embodying a processing system as described in any of the examples herein.

The layout processing system 754 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 754 has determined the circuit layout it may output a circuit layout definition to the IC generation system 756. A circuit layout definition may be, for example, a circuit layout description.

The IC generation system 756 generates an IC according to the circuit layout definition, as is known in the art. For example, the IC generation system 756 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 756 may be in the form of computer-readable code which the IC generation system 756 can use to form a suitable mask for use in generating an IC.

The different processes performed by the IC manufacturing system 752 may be implemented all in one location, e.g. by one party. Alternatively, the IC manufacturing system 752 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 7 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 7, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

Aspects of the disclosure are described in the numbered paragraphs of the following annex in terms of exemplary combinations of features.

### ANNEX

1. A processing system configured to process protected tasks, the processing system comprising:
   processing logic configured to process each of the protected tasks first and second times so as to generate, respectively, first and second processed outputs;
   a first fault detection unit operable in a mission mode in which it is configured to: compare the first and second processed outputs for a respective protected task; and generate a first signal indicative of whether said first and second processed outputs match; and
   a second fault detection unit operable in a mission mode in which it is configured to: compare the first and second processed outputs for the respective protected task; and generate a second signal indicative of whether said first and second processed outputs match;
   wherein the first signal and/or the second signal are indicative of whether one or more faults existed in the processing system during processing of the respective protected task and/or when generating said first and second signals.
2. The processing system of annex paragraph 1, wherein the processing system is operable in a first protected mode in which the first fault detection unit and the second fault detection unit operate, concurrently, in their respective mission modes, wherein the first signal and the second signal for the respective protected task can be compared in order to assess whether a fault existed at the first fault detection unit and/or the second fault detection unit when generating the first and second signals.
3. The processing system of annex paragraph 3, wherein the first signal and/or the second signal can also be used to assess whether a fault existed at the processing logic during processing of the respective protected task.
4. The processing system of any of annex paragraphs 1 to 3, wherein:
   the first fault detection unit is further operable in a test mode in which a test is performed to assess whether the first fault detection unit is functioning correctly; and/or
   the second fault detection unit is further operable in a test mode in which a test is performed to assess whether the second fault detection unit is functioning correctly.
5. The processing system of annex paragraph 4, wherein the test comprises inputting one or more predetermined test inputs into logic of the respective fault detection unit and assessing whether the resultant one or more outputs of that logic match one or more expected test outputs.
6. The processing system of annex paragraph 5, wherein the one or more predetermined test inputs are generated by a test pattern generator unit comprised by the respective fault detection unit.
7. The processing system of any of annex paragraphs 4 to 6, wherein the processing system is operable in a second protected mode in which:
   one of the first fault detection unit and the second fault detection unit operates in its test mode so as to assess whether that fault detection unit is functioning correctly; and
   concurrently, the other of the first fault detection unit and the second fault detection unit operates in its mission mode so as to generate the respective first or second signal, wherein the respective first or second signal can be used to assess whether a fault existed at the processing logic during processing of the respective protected task.
8. The processing system of annex paragraph 7, wherein the processing system is operable in a first protected mode in which the first fault detection unit and the second fault detection unit operate, concurrently, in their respective mission modes, wherein the first signal and the second signal for the respective protected task can be compared in order to assess whether a fault existed at the first fault detection unit and/or the second fault detection unit when generating the first and second signals, and wherein the processing system is configured to process a series of protected tasks, and operate in the first protected mode and the second protected mode during said processing.
9. The processing system of annex paragraph 8, wherein the processing system is configured to operate such that, throughout the processing of the series of protected tasks, at least one of the first fault detection unit and the second fault detection unit is operating in its respective mission mode.
10. The processing system of annex paragraph 8 or 9, wherein the processing system is configured to operate such that, during processing of the series of protected tasks:
   for a first period of time, both the first fault detection unit and the second fault detection unit concurrently operate in their respective mission modes;
   for a second period of time, the first fault detection unit operates in its mission mode and, concurrently, the second fault detection unit operates in its test mode; and
   for a third period of time, the second fault detection unit operates in its mission mode and, concurrently, the first fault detection unit operates in its test mode.
11. The processing system of any of annex paragraphs 4 to 10, wherein the processing system is further configured to process non-protected tasks, the processing logic is configured to process each of the non-protected tasks a single time so as to generate a single processed output, and the processing system is operable in a non-protected mode in which the first fault detection unit and the second fault detection unit operate, concurrently, in their respective test modes so as to assess whether those fault detection units are functioning correctly.
12. The processing system of any preceding annex paragraph, wherein comparing the first and second processed outputs for the respective protected task comprises:
   forming first and second signatures which are characteristic of, respectively, the first and second processed outputs for the respective protected task; and
   comparing the first and second signatures.
13. The processing system of any preceding annex paragraph, wherein the processing logic comprises:
   a first processing element configured to process each protected task for the first time so as to generate the first processed output for that protected task; and
   a second processing element configured to process each protected task for the second time so as to generate the second processed output for that protected task.
14. The processing system of any of annex paragraphs 1 to 12, wherein the processing logic comprises a processing element configured to process each protected task for the first and second times so as to generate, respectively, the first and second processed outputs for that protected task.
15. The processing system of annex paragraphs 13 or 14, wherein the processing logic further comprises the datapath between the processing element(s) and the first and second fault detection units.
16. An integrated circuit definition dataset that, when processed in an integrated circuit manufacturing system, configures the integrated circuit manufacturing system to manufacture the processing system of any preceding annex paragraph.
17. A non-transitory computer readable storage medium having stored thereon a computer readable description of the processing system of any of annex paragraphs 1 to 15 that, when processed in an integrated circuit manufacturing system, causes the integrated circuit manufacturing system to manufacture an integrated circuit embodying the processing system.
18. A method of processing a protected task at a processing system comprising processing logic configured to process protected tasks first and second times so as to generate, respectively, first and second processed outputs, a first fault detection unit operable in a mission mode in which it is configured to compare first and second processed outputs for a respective protected task and generate a first signal indicative of whether said first and second processed outputs match, and a second fault detection unit operable in a mission mode in which it is configured to compare the first and second processed outputs for the respective protected task and generate a second signal indicative of whether said first and second processed outputs match, the method comprising:
   processing, using the processing logic, the protected task first and second times so as to generate, respectively, first and second processed outputs;
   comparing, using the first fault detection unit, the first and second processed outputs for the protected task;
   generating, using the first fault detection unit, a first signal indicative of whether said first and second processed outputs match; and
   assessing, in dependence on the first signal, whether one or more faults existed in the processing system during processing of the protected task and/or when generating the first signal.
19. The method of annex paragraph 18, the method further comprising, when the processing system is operating in a second protected mode:
   concurrently to said processing, comparing and/or generating, performing a test on the second fault detection unit to assess whether the second fault detection unit is functioning correctly; and
   assessing, in dependence on the first signal, whether a fault existed at the processing logic during processing of the protected task.
20. The method of annex paragraph 18, the method further comprising, when the processing system is operating in a first protected mode:
   comparing, using the second fault detection unit, the first and second processed outputs for the protected task;
   generating, using the second fault detection unit, a second signal indicative of whether said first and second processed outputs match; and
   comparing the first signal and the second signal in order to assess whether a fault existed at the first fault detection unit and/or the second fault detection unit when generating the first and second signals.
21. The method of annex paragraph 20, the method further comprising, when the processing system is operating in a second protected mode:
   processing, using the processing logic, a further protected task first and second times so as to generate, respectively, first and second further processed outputs;
   comparing, using the first fault detection unit, the first and second further processed outputs for the further protected task;
   generating, using the first fault detection unit, a further first signal indicative of whether said first and second further processed outputs match;
   concurrently to said processing, comparing and/or generating, performing a test on the second fault detection unit to assess whether the second fault detection unit is functioning correctly; and
   assessing, in dependence on the further first signal, whether a fault existed at the processing logic during processing of the further protected task.
22. The method of annex paragraph 20 or 21, the method further comprising, when the processing system is operating in the second protected mode:
   processing, using the processing logic, an additional protected task first and second times so as to generate, respectively, first and second additional processed outputs;
   comparing, using the second fault detection unit, the first and second additional processed outputs for the additional protected task;
   generating, using the second fault detection unit, an additional second signal indicative of whether said first and second additional processed outputs match;
   concurrently to said processing, comparing and/or generating, performing a test on the first fault detection unit to assess whether the first fault detection unit is functioning correctly; and
   assessing, in dependence on the additional second signal, whether a fault existed at the processing logic during processing of the additional protected task.
23. The method of any of annex paragraphs 18 to 22, the method further comprising, when the processing system is operating in a non-protected mode:
   processing, using the processing logic, a non-protected task a single time so as to generate a single processed output;
   performing a test on the first fault detection unit to assess whether the first fault detection unit is functioning correctly; and
   concurrently to said performing, performing a test on the second fault detection unit to assess whether the second fault detection unit is functioning correctly.
24. Computer readable code configured to cause the method of any of annex paragraphs 18 to 23 to be performed when the code is run.

## Claims

1. A processing system configured to process protected tasks, the processing system comprising:
processing logic configured to process each of the protected tasks first and second times so as to generate, respectively, first and second processed outputs;
a first fault detection unit operable in a mission mode in which it is configured to: compare the first and second processed outputs for a respective protected task; and generate a first signal indicative of whether said first and second processed outputs match; and
a second fault detection unit operable in a mission mode in which it is configured to: compare the first and second processed outputs for the respective protected task; and generate a second signal indicative of whether said first and second processed outputs match; and
wherein the processing system is operable in a first protected mode in which:
the first fault detection unit and the second fault detection unit operate, concurrently, in their respective mission modes; and
the first signal and the second signal for the respective protected task are provided to a fault assessment unit for comparison in order to assess whether a fault existed at the first fault detection unit and/or the second fault detection unit when generating the first and second signals.

2. The processing system of claim 1, wherein:
the first fault detection unit is further operable in a test mode in which a test is performed to assess whether the first fault detection unit is functioning correctly; and/or
the second fault detection unit is further operable in a test mode in which a test is performed to assess whether the second fault detection unit is functioning correctly.

3. The processing system of claim 2, wherein the processing system is operable in a second protected mode in which:
one of the first fault detection unit and the second fault detection unit operates in its test mode so as to assess whether that fault detection unit is functioning correctly; and
concurrently, the other of the first fault detection unit and the second fault detection unit operates in its mission mode so as to generate the respective first or second signal, wherein the respective first or second signal can be used to assess whether a fault existed at the processing logic during processing of the respective protected task.

4. The processing system of claim 3, wherein the processing system is configured to process a series of protected tasks, and operate in the first protected mode and the second protected mode, mutually exclusively, during said processing.

5. The processing system of claim 4, wherein the processing system is configured to operate such that, throughout the processing of the series of protected tasks, at least one of the first fault detection unit and the second fault detection unit is operating in its respective mission mode.

6. The processing system of claim 4 or 5, wherein the processing system is configured to preferentially operate in the first protected mode until a fault signal is raised indicating that a fault exists in one or both of the first fault detection unit and the second fault detection unit, at which point the processing system is configured to swap into operating in the second protected mode in order to identify which fault detection unit is faulty.

7. The processing system of any of claims 4 to 6, wherein the processing system is configured to operate such that, during processing of the series of protected tasks:
for a first period of time, both the first fault detection unit and the second fault detection unit concurrently operate in their respective mission modes;
for a second period of time, the first fault detection unit operates in its mission mode and, concurrently, the second fault detection unit operates in its test mode; and
for a third period of time, the second fault detection unit operates in its mission mode and, concurrently, the first fault detection unit operates in its test mode;
optionally wherein the first period of time encompasses 98% of the total period of time during which the series of protected tasks are being processed, and the second and third periods of time each encompass 1% of that total period of time.

8. The processing system of any of claims 2 to 7, wherein the processing system is further configured to process non-protected tasks, the processing logic is configured to process each of the non-protected tasks a single time so as to generate a single processed output, and the processing system is operable in a non-protected mode in which the first fault detection unit and the second fault detection unit operate, concurrently, in their respective test modes so as to assess whether those fault detection units are functioning correctly.

9. The processing system of any preceding claim, wherein comparing the first and second processed outputs for the respective protected task comprises:
forming first and second signatures which are characteristic of, respectively, the first and second processed outputs for the respective protected task; and
comparing the first and second signatures.

10. The processing system of any preceding claim, wherein the processing logic comprises:
a first processing element configured to process each protected task for the first time so as to generate the first processed output for that protected task, and a second processing element configured to process each protected task for the second time so as to generate the second processed output for that protected task; or
a processing element configured to process each protected task for the first and second times so as to generate, respectively, the first and second processed outputs for that protected task;
optionally wherein the processing logic further comprises the datapath between the processing element(s) and the first and second fault detection units.

11. The processing system of any preceding claim, wherein:
the fault assessment unit is comprised by the processing system; or
the fault assessment unit is comprised by an external safety handling system.

12. A method of processing a protected task at a processing system comprising processing logic configured to process protected tasks first and second times so as to generate, respectively, first and second processed outputs, a first fault detection unit operable in a mission mode in which it is configured to compare first and second processed outputs for a respective protected task and generate a first signal indicative of whether said first and second processed outputs match, and a second fault detection unit operable in a mission mode in which it is configured to compare the first and second processed outputs for the respective protected task and generate a second signal indicative of whether said first and second processed outputs match, the method comprising:
in response to determining that the processing system is operating in a first protected mode:
processing, using the processing logic, the protected task first and second times so as to generate, respectively, first and second processed outputs;
comparing, using the first fault detection unit, the first and second processed outputs for the protected task;
generating, using the first fault detection unit, a first signal indicative of whether said first and second processed outputs match;
comparing, using the second fault detection unit, the first and second processed outputs for the protected task;
generating, using the second fault detection unit, a second signal indicative of whether said first and second processed outputs match; and
providing the first signal and the second signal to a fault assessment unit for comparison in order to assess whether a fault existed at the first fault detection unit and/or the second fault detection unit when generating the first and second signals.

13. The method of claim 12, the method further comprising, in response to determining that the processing system is operating in a second protected mode:
processing, using the processing logic, a further protected task first and second times so as to generate, respectively, first and second further processed outputs;
comparing, using the first fault detection unit, the first and second further processed outputs for the further protected task;
generating, using the first fault detection unit, a further first signal indicative of whether said first and second further processed outputs match;
concurrently to said processing, comparing and/or generating, performing a test on the second fault detection unit to assess whether the second fault detection unit is functioning correctly; and
providing the further first signal to the fault assessment unit for assessment in order to assess whether a fault existed at the processing logic during processing of the further protected task.

14. The method of claims 12 or 13, the method further comprising, when the processing system is operating in a non-protected mode:
processing, using the processing logic, a non-protected task a single time so as to generate a single processed output;
performing a test on the first fault detection unit to assess whether the first fault detection unit is functioning correctly; and
concurrently to said performing, performing a test on the second fault detection unit to assess whether the second fault detection unit is functioning correctly.

15. Computer readable code configured to cause the method of any of claims 12 to 14 to be performed when the code is run.
